(19) Europäisches Patentamt
European Patent Office
Office européen des brevets

(11) **EP 2 018 496 B1**

(12) **EUROPÄISCHE PATENTSCHRIFT**

(45) Veröffentlichungstag und Bekanntmachung des Hinweises auf die Patenterteilung:
**03.10.2012 Patentblatt 2012/40**

(21) Anmeldenummer: 07728470.1

(22) Anmeldetag: **25.04.2007**

(51) Int Cl.:
*F16H 61/02* ⁽²⁰⁰⁶·⁰¹⁾      *F16H 59/14* ⁽²⁰⁰⁶·⁰¹⁾

(86) Internationale Anmeldenummer:
**PCT/EP2007/054014**

(87) Internationale Veröffentlichungsnummer:
**WO 2007/131861 (22.11.2007 Gazette 2007/47)**

(54) **VERFAHREN ZUR ERMITTLUNG DES FAHRWIDERSTANDS EINES KRAFTFAHRZEUGS**

METHOD FOR DETERMINING THE DRIVING RESISTANCE OF A MOTOR VEHICLE

PROCÉDÉ POUR DÉTECTER LA RÉSISTANCE DE CONDUITE D'UN VÉHICULE AUTOMOBILE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **12.05.2006 DE 102006022170**

(43) Veröffentlichungstag der Anmeldung:
**28.01.2009 Patentblatt 2009/05**

(73) Patentinhaber: **ZF Friedrichshafen AG 88038 Friedrichshafen (DE)**

(72) Erfinder:
• **WOLFGANG, Werner**
  **88213 Ravensburg (DE)**
• **WÜRTHNER, Maik**
  **88048 Friedrichshafen (DE)**
• **SAUTER, Ingo**
  **Aberdeen, North Carolina 28315 (US)**

(56) Entgegenhaltungen:
**EP-A- 1 067 317      DE-A1- 3 314 800
DE-A1- 19 837 380**

**Beschreibung**

Die Erfindung betrifft ein Verfahren zur Ermittlung des Fahrwiderstands eines Kraftfahrzeugs, das in Verbindung mit einer Schaltung eines automatisierten Schaltgetriebes von einem Lastgang in einen Zielgang durchgeführt wird, wobei ein erster Fahrwiderstandswert $F\_fw\_1$ vor Beginn der Schaltung und ein zweiter Fahrwiderstandswert $F\_fw\_2$ zu einem späteren Zeitpunkt bestimmt wird, um bei einer größeren Änderung des Fahrwiderstands $\Delta F\_fw = F\_fw\_2 - F\_fw\_1$ eine Korrektur der Schaltung vorzunehmen.

Ein solches Verfahren mit den Merkmalen des Oberbegriffs des Anspruchs 1 ist aus der DE 33 14 800 bekannt

Die Kenntnis des Fahrwiderstands eines Kraftfahrzeugs ist von elementarer Bedeutung, um das Schaltverhalten eines automatisierten Schaltgetriebes optimal, also der jeweiligen Fahrsituation angepasst, steuern zu können. So wird die Bestimmung der Schaltdrehzahl, bei welcher der aktuell eingelegte Lastgang durch eine Schaltung verlassen wird, und die Bestimmung des Zielgangs, in den durch die Schaltung gewechselt wird, wesentlich von dem aktuellen Fahrwiderstand des Kraftfahrzeugs beeinflusst.

Unter dem Fahrwiderstand $F\_fw$ eines Fahrzeugs wird bekanntermaßen die Summe aus dem Steigungswiderstand $F\_steig$, dem Rollwiderstand $F\_roll$ und dem Luftwiderstand $F\_luft$ verstanden, also $F\_fw = F\_steig + F\_roll + F\_luft$. Über die allgemein bekannte Fahrwiderstandsgleichung

$$F\_zug = F\_steig + F\_roll + F\_luft + F\_träg = F\_fw + F\_träg$$

steht der Fahrwiderstand in Beziehung zu der auf die Antriebsräder des Kraftfahrzeugs bezogenen Zugkraft $F\_zug$ des Antriebsmotors und der Massenträgheitskraft $F\_träg$ des Kraftfahrzeugs, die sich aus dem Produkt der aktuellen Fahrzeugmasse $m$ und der aktuellen Fahrzeugbeschleunigung $a$ durch die Gleichung $F\_träg = m * a$ ergibt. Der Fahrwiderstand $F\_fw$ kann damit wie folgt angegeben werden:

$$F\_fw = F\_zug - m * a \, .$$

Während die Ermittlung des Fahrwiderstands $F\_fw$ vor und nach einer Schaltung, also bei eingelegtem Gang und geschlossener Motorkupplung, kein Problem darstellt und in bekannter Weise über die Berechnung der Zugkraft $F\_zug$ aus dem Drehmoment des Antriebsmotors und der Übersetzung des eingelegten Gangs sowie mittels der Berechnung der Massenträgheitskraft $F\_träg$ aus der aktuellen Masse $m$ und der aktuellen Beschleunigung $a$ des Kraftfahrzeugs erfolgen kann, ist die Ermittlung des Fahrwiderstands $F\_fw$ während einer Schaltung schwierig, da in dieser Phase weitgehend unbekannte und nur schwer messbare Kräfte bzw. Drehmomente auf den abtriebsseitigen Antriebsstrang einwirken.

So ist es weitgehend unbekannt, wie schnell der Antriebsmotor während einer Schaltung sein Drehmoment abbaut und wieder aufbaut, welcher Drehmomentanteil über die Synchronisierung des Zielgangs verloren geht, und wie sich Drehschwingungen, die durch den Schaltvorgang, wie durch das Öffnen und Schließen der Motorkupplung, durch das Auslegen des Lastgangs und durch das Synchronisieren und Einlegen des Zielgangs, oder durch Fahrbahnunebenheiten angeregt werden können, auf die Fahrdynamik des Kraftfahrzeugs, also auf die aktuelle Beschleunigung, auswirken. Aufgrund dieser Problematik wird bei bisherigen Verfahren zur Steuerung einer Getriebeschaltung auf die Bestimmung des Fahrwiderstands während einer Schaltung verzichtet.

Bei weitgehend konstantem Fahrwiderstand vor, während und nach einer Schaltung ist dies völlig unproblematisch, da der ausgewählte Soll-Gang von dem Schaltprogramm unter der Annahme eines näherungsweise konstanten Fahrwiderstands $F\_fw$ im Allgemeinen optimal an die vorliegende Fahrsituation angepasst ist.

Wenn sich der Fahrwiderstand $F\_fw$ aber während einer Schaltung stark ändert, kann dies zu Problemen führen, da das Schaltprogramm des Getriebesteuergerätes zunächst von einem falschen Fahrwiderstand $F\_fw$ ausgeht, und der geänderte richtige Fahrwiderstand $F\_fw$ erst mit zeitlicher Verzögerung nach dem Abschluss der Schaltung ermittelt werden kann.

Fährt das Kraftfahrzeug beispielsweise während einer Hochschaltung aus der Ebene in eine größere Steigung ein, so sollte nach Abschluss der Hochschaltung aufgrund des angestiegenen Fahrwiderstands $F\_fw$ sofort in einen kleineren Gang zurückgeschaltet werden. Wenn diese Rückschaltung aufgrund einer verzögerten Ermittlung des neuen erhöhten Fahrwiderstands $F\_fw$ aber zu spät erfolgt, kann das Kraftfahrzeug unter Umständen zum Stillstand kommen, wenn das durch den momentan eingelegten Gang gewandelte Drehmoment des Antriebsmotors für eine ausreichend hohe Zugkraft $F\_zug$ nicht mehr ausreicht.

Diese problematische Situation kann außer durch eine sofortige Rückschaltung auch durch eine Änderung des Zielgangs während der Hochschaltung in einen kleineren Gang, wie in einen zwischen dem Lastgang und dem Zielgang liegenden Gang (Hochschaltung in kleineren Gang), in den ursprünglichen Lastgang (Zielgang = Lastgang, kein Übersetzungswechsel), oder in einen unter dem Lastgang liegenden Gang (Hochschaltung wird zu Rückschaltung), vermieden werden. Derartige Reaktionen erfordern allerdings eine frühzeitige Kenntnis des geänderten, im vorgenannten Beispiel erhöhten Fahrwiderstands F_fw.

Der vorliegenden Erfindung liegt daher die Aufgabe zugrunde, ein Verfahren zur Ermittlung des Fahrwiderstands F_fw anzugeben, mit dem eine Änderung des Fahrwiderstands F_fw während einer Schaltung frühzeitig ermittelbar ist, um eine gegebenenfalls erforderliche Korrektur der Schaltung rechtzeitig durchführen zu können.

Die Lösung dieser Aufgabe gelingt durch ein Verfahren zur Ermittlung des Fahrwiderstands eines Kraftfahrzeugs, das in Verbindung mit einer Schaltung eines automatisierten Schaltgetriebes von einem Lastgang in einen Zielgang durchgeführt wird, wobei ein erster Fahrwiderstandswert F_fw_1 vor Beginn der Schaltung und ein zweiter Fahrwiderstandswert F_fw_2 zu einem späteren Zeitpunkt ermittelt wird, um bei einer größeren Änderung des Fahrwiderstands ∆F_fw = F_fw_2 - F_fw_1 eine Korrektur der Schaltung vorzunehmen.

Dabei ist vorgesehen, dass der zweite Fahrwiderstandswert F_fw_2 während der Schaltung ermittelt wird, indem über eine Zeitspanne ∆t, welche die zugkraftfreie Phase der Schaltung beinhaltet, mehrere diskrete Werte a_i der aktuellen Beschleunigung a des Kraftfahrzeugs erfasst werden, aus diesen Beschleunigungswerten a_i bei einer Zugschaltung das Beschleunigungsminimum a_min und bei einer Schubschaltung das Beschleunigungsmaximum a_max bestimmt wird, und mit diesem Extremwert der Beschleunigung (a_min oder a_max) und der Fahrzeugmasse m der zweite Fahrwiderstandswert (Fahrwiderstand während der Schaltung) F_fw_2 nach der Formel

$$F\_fw\_2 = -m * a\_min \quad bzw. \quad F\_fw\_2 = -m * a\_max$$

berechnet wird.

Da die zeitspanne ∆t, in der die Beschleunigungswerte a_i erfasst werden, die zugkraftfreie Phase der Schaltung beinhaltet, entspricht bei ausreichender zeitlicher Auflösung mindestens einer der Beschleunigungswerte a_i derjenigen Fahrzeugbeschleunigung a, die alleine durch den Fahrwiderstand F_fw hervorgerufen wird, da aufgrund des geöffneten Antriebsstrangs keine Zugkraft des Antriebsmotors wirkt (F_zug = 0).

Dieser Beschleunigungswert a_i entspricht bei einer Zugschaltung eindeutig dem Minimalwert der Beschleunigungswerte a_i, also dem Beschleunigungsminimum a_min, und bei einer Schubschaltung eindeutig dem Maximalwert der Beschleunigungswerte a_i, also dem Beschleunigungsmaximum a_max. Somit wird mit dem jeweiligen Extremwert der Beschleunigung (a_min oder a_max) und mit der Fahrzeugmasse m nach den Formeln

$$F\_fw\_2 = -m * a\_min \quad beziehungsweise \quad F\_fw\_2 = -m * a\_max$$

ein relativ genauer Wert des Fahrwiderstands F_fw während der Schaltung berechnet, der zeitlich in etwa der Mitte der Schaltung zuzuordnen ist. Damit wird eine Änderung des Fahrwiderstands ∆_fw = F_fw_2 - F_fw_1 frühzeitig erkannt, so dass bei einer größeren Änderung des Fahrwiderstands ∆_fw die aktuelle Schaltung rechtzeitig korrigiert werden kann.

Die während der Schaltung, also in der zugkraftfreien Phase der Schaltung, durch den Extremwert der Beschleunigungswerte (a_min oder a_max) ermittelte Beschleunigung a des Kraftfahrzeugs kann ebenfalls zur Bestimmung der Fahrzeugmasse m genutzt werden. Da dies aber ein anderes Verfahren betreffen würde, wird die Fahrzeugmasse m vorliegend als bekannte Größe angesehen.

Wenn nach dem erfindungsgemäßen Verfahren während oder unmittelbar nach einer Schaltung eine größere Änderung des Fahrwiderstands ∆F_fw festgestellt wird, so kann die Reaktion darauf im Sinne einer Korrektur der aktuellen Schaltung beispielsweise wie folgt aussehen:

1. Fahrsituation:

Zug-Hochschaltung beim Einfahren aus der Ebene in eine Steigung:

- nach der Hochschaltung sofortige Rückschaltung (schnelle Folgeschaltung);
- während der Schaltung Korrektur des Zielgangs in den zuvor eingelegten Lastgang (kein Übersetzungswechsel);
- während der Schaltung Korrektur des Zielgangs in einen kleineren Gang (Hochschaltung wird zu Rückschaltung).

2. Fahrsituation:

Zug-Rückschaltung beim Einfahren aus einer Steigung in die Ebene:

- nach der Rückschaltung sofortige Hochschaltung (schnelle Folgeschaltung);
- während der Schaltung Korrektur des Zielgangs in den zuvor eingelegten Lastgang (kein Übersetzungswechsel);
- während der Schaltung Korrektur des Zielgangs in einen größeren Gang (Rückschaltung wird zu Hochschaltung).

3. Fahrsituation:

Schub-Rückschaltung beim Einfahren aus einem Gefälle in die Ebene:

- während der Schaltung Korrektur des Zielgangs in den zuvor eingelegten Lastgang (kein Übersetzungswechsel).

Vorteilhafte Ausgestaltungen des erfindungsgemäßen Verfahrens sind Gegenstand der Ansprüche 2 bis 10.

Zur Erfassung eines optimalen Extremwertes der Beschleunigung ($a\_min$ oder $a\_max$) ist vorgesehen, dass die Beschleunigungswerte $a\_i$ jeweils bevorzugt in einem zeitlichen Abstand von maximal 10 ms ermittelt werden. Hierdurch ist erfahrungsgemäß sichergestellt, dass zumindest einer der Beschleunigungswerte $a\_i$ dem alleine durch den Fahrwiderstand $F\_fw$ beeinflussten Extremwert ($a\_min$ oder $a\_max$) entspricht.

Zur Eliminierung von Messfehlern und Störungen bei der Erfassung der Beschleunigungswerte $a\_i$ werden diese zweckmäßig vor der Bestimmung des Extremwertes der Beschleunigung ($a\_min$ oder $a\_max$) gefiltert, wozu allgemein bekannte numerische Verfahren zur Anwendung kommen können.

Die Zeitspanne $\Delta t$ zur Erfassung der Beschleunigungswerte $a\_i$ kann mit dem Beginn des Öffnens der Motorkupplung beginnen und mit dem Ende des Schließens der Motorkupplung enden. Hierbei sind zwar die Anfangs- und Endwerte der Beschleunigungswerte $a\_i$ aufgrund der noch nicht vollständig geöffneten oder teilweise schon wieder geschlossenen Motorkupplung und der somit wirksamen Zug- bzw. Schubkraft des Antriebsmotors stark verfälscht. Diese Beschleunigungswerte $a\_i$ fallen aber bei der Ermittlung des Extremwertes ($a\_min$ bzw. $a\_max$) ohnehin heraus und beeinflussen die Bestimmung der Beschleunigung während der Schaltung, also in der Rollphase der Schaltung, somit nicht negativ. Die Zeitspanne $\Delta t$ zur Erfassung der Beschleunigungswerte $a\_i$ kann aber auch kürzer gefasst werden und mit dem Beginn des Auslegens des Lastgangs beginnen sowie mit dem Ende des Einlegens des Zielgangs enden.

Das erfindungsgemäße Verfahren ist bevorzugt nur dann anwendbar, wenn während der Schaltung ein eindeutiges Beschleunigungsminimum $a\_min$ oder ein eindeutiges Beschleunigungsmaximum $a\_max$ vorliegt. Dies ist aber nur bei einer reinen Zugschaltung (Zugbetrieb vor und nach der Schaltung) bzw. bei einer reinen Schubschaltung (Schubbetrieb vor und nach der Schaltung) der Fall.

Es ist daher zweckmäßig, wenn vor der Ermittlung des Fahrwiderstands während der Schaltung $F\_fw\_2$ bzw. der Ermittlung des Extremwertes ($a\_min$ oder $a\_max$) aus den Beschleunigungswerten $a\_i$ zunächst geprüft wird, ob es sich bei der aktuellen Schaltung um eine reine Zugschaltung oder um eine reine Schubschaltung handelt, und dass die Ermittlung des zweiten Fahrwiderstandswertes (Fahrwiderstand während der Schaltung) $F\_fw\_2$ nur erfolgt, wenn eine reine Zugschaltung oder eine reine Schubschaltung vorliegt.

Zur Feststellung der Schaltungsart wird bevorzugt das Drehmoment des Antriebsmotors vor Beginn der Schaltung $M\_vS$ und nach Abschluss der Schaltung $M\_nS$ ermittelt, wobei eine reine Zugschaltung dann vorliegt, wenn beide Drehmomentwerte $M\_vS$, $M\_nS$ größer als Null sind ($M\_vS > 0$ und $M\_nS > 0$), und eine reine Schubschaltung dann vorliegt, wenn beide Drehmomentwerte $M\_vS$, $M\_nS$ kleiner als Null sind ($M\_vS < 0$ und $M\_nS < 0$).

Das Drehmoment des Antriebsmotors vor der Schaltung $M\_vS$ geht in die Bestimmung des ersten Fahrwiderstandswertes $F\_fw\_1$ ein, wobei die Ermittlung dieses Drehmomentwertes bei absolut kleinem Drehmoment $M\_vS$ relativ ungenau ist. Außerdem ist bei absolut kleinem Drehmoment $M\_vS$ des Antriebsmotors vor der Schaltung die Beschleunigungsdifferenz zwischen Zugbetrieb bzw. Schubbetrieb vor der Schaltung sowie dem Rollen in der zugkraftfreien Phase während der Schaltung relativ gering, so dass sich Störungen und Messfehler in diesem Fall überproportional auswirken können. Demzufolge wäre dann auch die Ermittlung der Änderung des Fahrwiderstands $\Delta F\_fw = F\_fw\_2 - F\_fw\_1$ vergleichsweise ungenau, was unter Umständen zu einer falschen Reaktion der Getriebesteuerung führen könnte.

Zur Vermeidung einer fehlerhaften Bestimmung des Fahrwiderstands $F\_fw$ ist daher zweckmäßig vorgesehen, dass zunächst das Drehmoment des Antriebsmotors vor Beginn der Schaltung $M\_vS$ ermittelt und bei Vorliegen einer reinen Zugschaltung mit einem vorab festgelegten Mindestmoment $M\_Zmin$ verglichen wird, und dass die Ermittlung des zweiten Fahrwiderstandswertes (Fahrwiderstand während der Schaltung) F_fw_2 nur erfolgt, wenn das Drehmoment des Antriebsmotors größer gleich dem Mindestmoment ist (M_vS >= M_Zmin).

Entsprechend wird dann bei Vorliegen einer reinen Schubschaltung das Drehmoment des Antriebsmotors vor Beginn der Schaltung M_vS mit einem vorab festgelegten Maximalmoment M_Smax verglichen, und die Ermittlung des zweiten Fahrwiderstandswertes (Fahrwiderstand während der Schaltung) F_fw_2 erfolgt nur dann, wenn das Drehmoment des Antriebsmotors kleiner gleich dem Maximalmoment ist (M_vS <= M_Smax).

Ebenfalls würde die Betätigung von Verzögerungseinrichtungen, wie der Betriebsbremse, der Feststellbremse oder eines Retarders, während der Schaltung zur Ermittlung eines fehlerhaften Extremwertes der Beschleunigung (a_min oder a_max) und damit des zweiten Fahrwiderstandswertes F_fw_2 führen, da das Kraftfahrzeug dann in der zugkraftfreien Phase nicht frei rollt. Dabei kann beispielsweise die Betätigung der Betriebsbremse, also der Radbremsen, sowohl durch den Fahrer über das Bremspedal als auch durch eine Steuerungseinrichtung, wie ESP oder ASR, automatisch erfolgen. Zur Vermeidung einer diesbezüglichen Fehlbestimmung des Fahrwiderstands F_fw wird zweckmäßig während der Schaltung der Betätigungszustand der Verzögerungseinrichtungen des Kraftfahrzeugs erfasst, und bei einer Betätigung mindestens einer der Verzögerungseinrichtungen die Ermittlung des zweiten Fahrwiderstandswertes (Fahrwiderstand während der Schaltung) F_fw_2 abgebrochen.

Zur Verdeutlichung der Erfindung ist der Beschreibung eine Zeichnung beigefügt.
In diesen zeigt:

Fig. 1    einen gemessenen Zeitverlauf der Fahrzeugbeschleunigung a über mehrere Zugschaltungen und

Fig. 2    die vereinfachten Zeitverläufe der Zugkraft F_zug und der Beschleunigung a über eine einzige Zug-Hochschaltung.

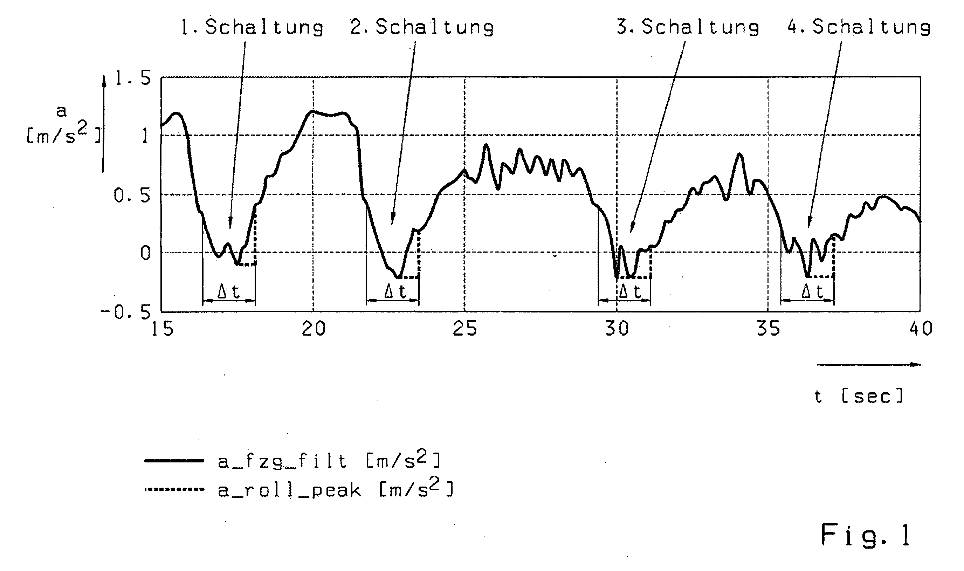

Bei dem Verfahren gemäß der Erfindung beruht die Ermittlung einer Änderung des Fahrwiderstands F_fw während einer Gangschaltung auf der exakten Erfassung der Beschleunigung a des Kraftfahrzeugs in der zugkraftfreien Rollphase der Schaltung. Die Ermittlung dieses Beschleunigungswertes ist beispielhaft in dem Diagramm von Fig. 1 veranschaulicht, in dem der Zeitverlauf der Beschleunigung a eines Kraftfahrzeugs über mehrere mit einer Unterbrechung der Zugkraft verbundene Schaltungen dargestellt ist. Darin gibt die durchgezogene Linie die gefilterten Werte a_fzg_filt kontinuierlich, also in einem festgelegten Zeitintervall von etwa 1 - 20 ms, ermittelter Beschleunigungswerte a_i wieder. Bei den Schaltungen handelt es sich jeweils um eine Zugschaltung.

Demzufolge führt jede der Schaltungen zu einem Einbruch der Beschleunigung a, die während der Schaltungen jeweils negative Werte < 0 m/s annimmt. Das Kraftfahrzeug wird also jeweils während der Schaltung durch den wirksamen Fahrwiderstand F_fw abgebremst, da der Triebstrang zeitweise geöffnet ist und dann kein Antriebsmoment in Form einer Zugkraft auf die Antriebsräder übertragen wird (F_zug = 0).

Zur Ermittlung der Beschleunigung a in der zugkraftfreien Phase der Schaltung wird nun bei jeder der Schaltungen jeweils in einer Zeitspanne Δt, welche die zugkraftfreie Phase beinhaltet, ein Extremwert der in diesem Zeitraum erfassten Beschleunigungswerte a_i ermittelt. Da es sich vorliegend um Zugschaltungen handelt, wird jeweils das Beschleunigungsminimum a_min festgestellt.

Der Verlauf dieses Extremwertes a_roll_peak ist in Fig. 1 jeweils durch die unterbrochene Linie dargestellt. Hierdurch wird deutlich, dass durch das Verfahren trotz starker Störungen zu Beginn und zum Ende der jeweiligen Schaltung das jeweilige Beschleunigungsminimum a_min sicher ermittelt wird. Diesem Beschleunigungsminimum a_min ist jeweils der momentane Fahrwiderstand F_fw_2 eindeutig zuzuordnen, so dass hiermit eine relativ genaue Berechnung des Fahrwiderstands während der Schaltung F_fw_2 möglich ist.

In den Bereichen des zeitlichen Verlaufs t, in denen der Verlauf von a_rol_peak nicht von a_fzg_filt zu unterscheiden ist, insbesondere außerhalb der Bereiche Δt, überdecken sich die beiden Verläufe von a_roll_peak und a_fzg_filt.

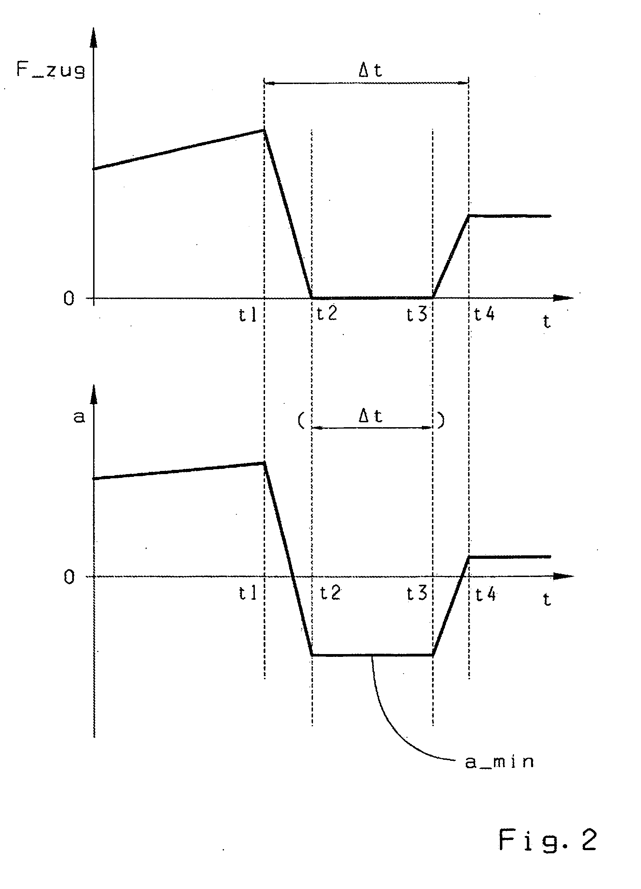

Zur weiteren Veranschaulichung des Verfahrens ist in Fig.2 eine Zug-Hochschaltung mit vereinfachten Zeitverläufen der Beschleunigung a und der auf die Antriebsräder bezogenen Zugkraft F_zug des Antriebsmotors mit größerer zeitlicher Auflösung dargestellt. Die Schaltung beginnt zum Zeitpunkt t1 und endet im Zeitpunkt t4. Zwischen dem Zeitpunkt t1 und t2 wird die Motorkupplung geöffnet und das Drehmoment des Antriebsmotors abgebaut; gegebenenfalls auch schon der eingelegte Lastgang ausgelegt. Unmittelbar vor dem Zeitpunkt t3 wird der einzulegende Zielgang synchronisiert und nachfolgend eingelegt. Das Schließen der Motorkupplung und der Aufbau des Drehmomentes des Antriebsmotors erfolgt zwischen dem Zeitpunkt t3 und dem Zeitpunkt t4.

Die zugkraftfreie Phase der Schaltung erstreckt sich somit in etwa zwischen dem Zeitpunkt t2 und dem Zeitpunkt t3, wobei aber zu Beginn und zum Ende dieses Zeitraums bekanntlich noch starke Störungseinflüsse wirksam sein können. In der Mitte der zugkraftfreien Phase ist die Beschleunigung a jedoch weitgehend störungsfrei und entspricht dem gesuchten Minimalwert a_min.

Zur sicheren Ermittlung des Beschleunigungsminimums a_min wird die Zeitspanne Δt, in der aus den aktuellen Beschleunigungswerten a_i bzw. a_fzg_filt das Beschleunigungsminimum a_min bestimmt wird, so gewählt, dass die zugkraftfreie Phase sicher enthalten ist. Die Zeitspanne ∆t kann sich beispielsweise, wie in dem oberen Teil von Fig. 2 eingezeichnet, von dem Zeitpunkt t1 bis zum Zeitpunkt t4 oder, wie in dem unteren Teil von Fig. 2 eingezeichnet, von dem Zeitpunkt t2 bis zum Zeitpunkt t3 erstrecken.

Bezugszeichen

| a | Beschleunigung, Längsbeschleunigung |
| a_fzg_filt | gefilterter Beschteunigungswert |
| a_i | diskreter Beschleunigungswert |
| a_max | Maximalwert von a_i, Beschleunigungsmaximum |
| a_min | Minimalwert von a_i, Beschleunigungsminimum |
| a_roll_peak | Extremwert der Beschleunigung |
| F_fw | Fahrwiderstand |
| F_fw_1 | erster Fahrwiderstandswert, F_fw vor Schaltung |
| F_fw_2 | zweiter Fahrwiderstandswert, F_fw während Schaltung |
| F_luft | Luftwiderstand |
| F_roll | Rollwiderstand |
| F_steig | Steigungswiderstand |
| F_träg | Massenträgheitskraft |
| F_zug | Zugkraft |
| ∆F_fw | Änderung des Fahrwiderstands |
| m | Masse, Gesamtmasse |
| M | Drehmoment |
| M_nS | Drehmoment nach Schaltung |
| M_Smax | Maximalmoment für Schubschaltung |
| M_vS | Drehmoment vor Schaltung |
| M_Zmin | Minimalmoment für Zuschaltung |
| t | Zeit |
| t1 | Zeitpunkt |
| t2 | Zeitpunkt |
| t3 | Zeitpunkt |
| t4 | Zeitpunkt |
| ∆t | Zeitspanne |

**Patentansprüche**

1. Verfahren zur Ermittlung des Fahrwiderstands eines Kraftfahrzeugs, das in Verbindung mit einer Schaltung eines automatisierten Schaltgetriebes von einem Lastgang in einen Zielgang durchgeführt wird, wobei ein erster Fahrwiderstandswert F_fw_1 vor Beginn der Schaltung und ein zweiter Fahrwiderstandswert F_fw_2 zu einem späteren Zeitpunkt ermittelt wird, um bei einer größeren Änderung des Fahrwiderstand $\Delta F\_fw = F\_fw\_2 - F\_fw\_1$ eine Korrektur der Schaltung vorzunehmen, **dadurch gekennzeichnet, dass** der zweite Fahrwiderstandswert F_fw_2 während der Schaltung ermittelt wird, indem über eine Zeitspanne ∆t, welche die zugkraftfreie Phase der Schaltung beinhaltet, mehrere diskrete Werte a_i der aktuellen Beschleunigung a des Kraftfahrzeugs erfasst werden, aus diesen Beschleunigungswerten a_i bei einer Zugschaltung das Beschleunigungsminimum a_min und bei einer Schubschaltung das Beschleunigungsmaximum a_max bestimmt wird, und mit diesem Extremwert der Beschleunigung (a_min oder a_max) und der Fahrzeugmasse m der zweite Fahrwiderstandswert (Fahrwiderstand während der Schaltung) F_fw_2 nach der Formel $F\_fw\_2 = - m*a\_min$ bzw. $F\_fw\_2 = - m*a\_max$ berechnet wird.

2. Verfahren nach Anspruch 1, **dadurch gekennzeichnet, dass** die Beschleunigungswerte a_i zur Erfassung eines optimalen Extremwertes der Beschleunigung (a_min oder a_max) jeweils in einem zeitlichen Abstand von maximal 10 ms ermittelt werden.

3. Verfahren nach Anspruch 1 oder 2, **dadurch gekennzeichnet, dass** die Beschleunigungswerte a_i zur Eliminierung von Messfehlern und Störungen vor der Bestimmung des Extremwertes der Beschleunigung (a_min oder a_max) gefiltert werden.

**4.** Verfahren nach zumindest einem der Ansprüche 1 bis 3, **dadurch gekennzeichnet, dass** die Zeitspanne $\Delta t$ zur Erfassung der Beschleunigungswerte a_i mit dem Beginn (t1) des Öffnens der Motorkupplung beginnt und mit dem Ende (t4) des Schließens der Motorkupplung endet.

**5.** Verfahren nach zumindest einem der Ansprüche 1 bis 3, **dadurch gekennzeichnet, dass** die Zeitspanne $\Delta t$ zur Erfassung der Beschleunigungswerte a_i mit dem Beginn (t2) des Auslegens des Lastgangs beginnt und mit dem Ende (t3) des Einlegens des Zielgangs endet.

**6.** Verfahren nach zumindest einem der Ansprüche 1 bis 5, **dadurch gekennzeichnet, dass** zunächst geprüft wird, ob es sich bei der Schaltung um eine reine Zugschaltung oder um eine reine Schubschaltung handelt, und dass die Ermittlung des zweiten Fahrwiderstandswertes (Fahrwiderstand während der Schaltung) F_fw_2 nur erfolgt, wenn eine reine Zugschaltung oder eine reine Schubschaltung vorliegt.

**7.** Verfahren nach Anspruch 6, **dadurch gekennzeichnet, dass** zur Feststellung der Schaltungsart das Drehmoment des Antriebsmotors vor Beginn der Schaltung M_vS und nach Abschluss der Schaltung M_nS ermittelt wird, und dass eine reine Zugschaltung vorliegt, wenn beide Drehmomentwerte M_vS, M_nS größer als Null sind (M_vS > 0 und M_nS > 0), sowie eine reine Schubschaltung vorliegt, wenn beide Drehmomentwerte M_vS, M_nS kleiner als Null sind (M_vS < 0 und M_nS < 0).

**8.** Verfahren nach Anspruch 6 oder 7, **dadurch gekennzeichnet, dass** zunächst das Drehmoment des Antriebsmotors vor Beginn der Schaltung M_vS ermittelt und bei Vorliegen einer reinen Zugschaltung mit einem vorab festgelegten Mindestmoment M_Zmin verglichen wird, und dass die Ermittlung des zweiten Fahrwiderstandswertes (Fahrwiderstand während der Schaltung) F_fw_2 nur erfolgt, wenn das Drehmoment des Antriebsmotors größer gleich dem Mindestmoment ist (M_vS >= M_Zmin).

**9.** Verfahren nach einem der Ansprüche 6 bis 8, **dadurch gekennzeichnet, dass** das Drehmoment des Antriebsmotors vor Beginn der Schaltung M_vS ermittelt und bei Vorliegen einer reinen Schubschaltung mit einem vorab festgelegten Maximalmoment M_Smax verglichen wird, und dass die Ermittlung des zweiten Fahrwiderstandswertes (Fahrwiderstand während der Schaltung) F_fw_2 nur erfolgt, wenn das Drehmoment des Antriebsmotors kleiner gleich dem Maximalmoment ist (M_vS <= M_Smax).

**10.** Verfahren nach einem der Ansprüche 1 bis 9, **dadurcH gekennzeichnet, dass** während der Schaltung der Betätigungszustand der Verzögerungseinrichtungen des Kraftfahrzeugs erfasst wird, und dass bei einer Betätigung mindestens einer der Verzögerungseinrichtungen die Ermittlung des zweiten Fahrwiderstandswertes (Fahrwiderstand während der Schaltung) F_fw_2 abgebrochen wird.

## Claims

**1.** Method of determining the driving resistance of a motor vehicle that is carried out in connection with the shifting of an automated gearbox from a low gear into a target gear, wherein a first driving resistance value F_fw_1 is determined before the shifting commences and a second driving resistance value F_fw_2 is determined at a later point in time, in order to carry out a shift correction in the event of a larger change of the driving resistance $\Delta F\_fw = F\_fw\_2 - F\_fw\_1$, **characterized in that** the second driving resistance value F_fw_2 is determined during shifting by recording multiple discrete values a_i of the instantaneous acceleration a of the motor vehicle over a time period $\Delta t$, which includes the shifting phase that is free of pulling force; for a pull shift the acceleration minimum a_min is determined and for a push shift the acceleration minimum a_max is determined from these acceleration values a_i, and the second driving resistance value (driving resistance during the shift) F_fw_2 is calculated from this extreme value of the acceleration (a_min or a_max) and the vehicle mass m according to the formula $F\_fw\_2 = -m \cdot a\_min$ or $F\_fw\_2 = -m \cdot a\_max$.

**2.** Method according to Claim 1, **characterized in that** the acceleration values a_i for determining an optimal extreme value of the acceleration (a_min or a_max) are each determined at a time interval of a maximum of 10 ms.

**3.** Method according to Claim 1 or 2, **characterized in that** the acceleration values a_i are filtered for the elimination of measurement errors and anomalies before determining the extreme value of the acceleration (a_min or a_max).

**4.** Method according to at least one of the Claims 1 to 3, **characterized in that** the time span $\Delta t$ for recording the

acceleration values a_i begins with the start (t1) of the opening of the clutch and finishes with the end (t4) of the closing of the clutch.

5. Method according to at least one of the Claims 1 to 3, **characterized in that** the time period ∆t for recording the acceleration values a_i begins with the start (t2) of the engagement of the low gear and finishes with the end (t3) of the engagement of the target gear.

6. Method according to at least one of the Claims 1 to 5, **characterized in that** a check is first made as to whether the shift is a pure pull shift or a pure push shift, and that the determination of the second driving resistance value (driving resistance during the shift) F_fw_2 only takes place if a pure pull shift or a pure push shift is involved.

7. Method according to Claim 6, **characterized in that** in order to determine the type of shift, the torque of the drive motor is determined before the start of the shift M_vS and after completion of the shift M_nS, and that a pure pull shift is involved if both torque values M_vS, M_nS are greater than zero (M_vS > 0 and M_nS > 0), and a pure push shift is involved if both torque values M_vS, M_nS are less than zero (M_vS < 0 and M_nS < 0).

8. Method according to Claim 6 or 7, **characterized in that** the torque of the drive motor is first determined before the start of the shift M_vS and, if a pure pull shift is involved, is compared with a previously determined minimum torque M_Zmin, and that the determination of the second driving resistance value (driving resistance during the shift) F_fw_2 only takes place if the torque of the drive motor is greater than or equal to the minimum torque (M_vS >= M_Zmin).

9. Method according to any one of the Claims 6 to 8, **characterized in that** the torque of the drive motor before the start of the shift M_vS is determined and, if a pure push shift is involved, is compared with a previously determined maximum torque M_Smax, and that the determination of the second driving resistance value (driving resistance during the shift) F_fw_2 only takes place if the torque of the drive motor is less than or equal to the maximum torque (M_vS <= M_Smax).

10. Method according to any one of the Claims 1 to 9, **characterized in that** during shifting the operating state of the deceleration devices of the motor vehicle is recorded, and that in the event of activation of at least one of the deceleration devices, the determination of the second driving resistance value (driving resistance during shifting) F_fw_2 is aborted.

**Revendications**

1. Procédé de détermination de la résistance de conduite d'un véhicule automobile, qui est mis en oeuvre en liaison avec un passage d'une boîte de vitesses automatique d'un rapport sous charge à un rapport cible, une première valeur de résistance de conduite F_fw_1 étant déterminée avant le début du passage et une deuxième valeur de résistance de conduite F_fw_2 étant déterminée à un moment ultérieur, afin d'entreprendre une correction du passage en cas d'une grande variation de la résistance de conduite ∆F_fw = F_fw_2 - F_fw_1, **caractérisé en ce que** la deuxième valeur de résistance de conduite F_fw_2 est déterminée pendant le passage, en détectant sur une plage de temps ∆t, qui contient la phase exempte de force de traction du passage, plusieurs valeurs discrètes a_i de l'accélération actuelle a du véhicule automobile, d'après ces valeurs d'accélération a_i lors d'un passage de vitesse en traction le minimum d'accélération a_min est déterminé et lors d'un passage de vitesse en poussée le maximum d'accélération a_max est déterminé, et, avec cette valeur extrême de l'accélération (a_min ou a_max) et la masse du véhicule m, la deuxième valeur de résistance de conduite (résistance de conduite pendant le passage) F_fw_2 est calculée selon la formule F_fw_2 = - m*a_min respectivement F_fw_2 = m*a_max.

2. Procédé selon la revendication 1, **caractérisé en ce que** les valeurs d'accélération a_i sont déterminées afin de détecter une valeur extrême optimale de l'accélération (a_min ou a_max) respectivement dans un intervalle temporel de 10 ms au maximum.

3. Procédé selon la revendication 1 ou 2, **caractérisé en ce que** les valeurs d'accélération a_i sont filtrées afin d'éliminer les erreurs de mesure et les perturbations avant la détermination de la valeur extrême de l'accélération (a_min ou a_max).

4. Procédé selon au moins l'une des revendications 1 à 3, **caractérisé en ce que** la plage de temps ∆t pour détecter les valeurs d'accélération a_i commence avec le début (t1) de l'ouverture de l'accouplement moteur et se termine avec la fin (t4) de la fermeture de l'accouplement moteur.

**5.** Procédé selon au moins l'une des revendications 1 à 3, **caractérisé en ce que** la plage de temps $\Delta t$ pour détecter les valeurs d'accélération a_i commence avec le début (t2) du débrayage du rapport sous charge et se termine avec la fin (t3) de l'enclenchement du rapport cible.

**6.** Procédé selon au moins l'une des revendications 1 à 5, **caractérisé en ce qu'**il est d'abord vérifié si le passage consiste en un pur passage de vitesse en traction ou en un pur passage de vitesse en poussée, et **en ce que** la détermination de la deuxième valeur de résistance de conduite (résistance de conduite pendant le passage) F_fw_ 2 a lieu seulement en présence d'un pur passage de vitesse en traction ou d'un pur passage de vitesse en poussée.

**7.** Procédé selon la revendication 6, **caractérisé en ce qu'**afin d'établir le type de passage, le couple de rotation du moteur de propulsion est déterminé avant le début du passage M_vS et après la fin du passage M_nS, et **en ce qu'**un pur passage de vitesse en traction est présent quand les deux valeurs de couple de rotation M_vS, M_nS sont supérieures à zéro (M_vS > 0 et M_nS > 0), et un pur passage de vitesse en poussée est présent quand les deux valeurs de couple de rotation M_vS, M_nS sont inférieures à zéro (M_vS < 0 et M_nS < 0).

**8.** Procédé selon la revendication 6 ou 7, **caractérisé en ce qu'**en premier lieu, le couple de rotation du moteur de propulsion est déterminé avant le début du passage M_vS et en présence d'un pur passage de vitesse en traction est comparé avec un couple minimal M_Zmin établi à l'avance, et **en ce que** la détermination de la deuxième valeur de résistance de conduite (résistance de conduite pendant le passage) F_fw_2 a lieu seulement quand le couple de rotation du moteur de propulsion est supérieur ou égal au couple minimal (M_vS >= M_Zmin).

**9.** Procédé selon l'une des revendications 6 à 8, **caractérisé en ce que** le couple de rotation du moteur de propulsion est déterminé avant le début du passage M_vS et en présence d'un pur passage de vitesse en poussée est comparé avec un couple maximal établi à l'avance M_Smax, et **en ce que** la détermination de la deuxième valeur de résistance de conduite (résistance de conduite pendant le passage) F_fw_2 a lieu seulement quand le couple de rotation du moteur de propulsion est inférieur ou égal au couple maximal (M_vS <= M_Smax).

**10.** Procédé selon l'une des revendications 1 à 9, **caractérisé en ce que** pendant le passage, l'état d'actionnement des dispositifs de décélération du véhicule automobile est détecté, et **en ce que** lors d'un actionnement d'au moins l'un des dispositifs de décélération, la détermination de la deuxième valeur de résistance de conduite (résistance de conduite pendant le passage) F_fw_2 est interrompue.

1.Schaltung   2.Schaltung   3.Schaltung   4.Schaltung

$a$ [m/s²]

1.5

1

0.5

0

-0.5

15   20   25   30   35   40

t [sec]

$\Delta t$   $\Delta t$   $\Delta t$   $\Delta t$

——— a_fzg_filt [m/s²]

·········· a_roll_peak [m/s²]

Fig.1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3314800